# EUROPEAN PATENT APPLICATION

(11) **EP 2 128 556 A2**
(43) Date of publication of application: **02.12.2009**
(21) Application number: 09161354.7
(22) Date of filing: 28.05.2009
(51) Int. Cl.: F41H 5/013

(54) **Attachment mechanism for armour elements**

(30) Priority: 29.05.2008 IL 19180708
(71) Applicant: Plasan Sasa Ltd, 13870 M.P. Marom Hagalil (IL)
(72) Inventor: Tikotzenski, Leor, 12305, KFAR HANASI (IL); Laor, Amir, 12245, DAN (IL)
(74) Representative: Minoja, Fabrizio

(57) **Abstract**

An attachment mechanism (1) adapted for attachment of an armor element (A) to a body to be protected (B) by the armor element (A), the attachment mechanism (1) comprising a first unit (20) and a second unit (10) which are adapted to engage with each other to provide the attachment, said first unit (20) comprising a second static member (30) and a working member (40). One of the first and second units is adapted for fixed attachment to the armor element, and the other is adapted for fixed attachment to the body to be protected (B). The mechanism further comprises a screw-free locking arrangement between the first and second unit, defined by a locking gap (G) associated with a locking body portion (52,57) movably held the first static member (30), and a locking tongue portion (41) of the working member (40) acting on the second unit.

## Description

### FIELD OF THE INVENTION

This invention relates to armor elements, such as, for example, armor panels, and to mechanisms for their mounting on a vehicle to be protected.

### BACKGROUND OF THE INVENTION

Armor panels are commonly used to protect a body against various threats, mostly incoming projectiles. Such armor panels are adapted to dissipate and/or absorb the kinetic energy of the incoming projectile in order to prevent it from penetrating the body.

When it is desired to protect a body, for example, a vehicle, armor panels are usually mounted onto the exterior/interior of the vehicle and are fastened to become affixed thereto.

Mounting of an armor panel onto a vehicle is normally performed either by welding the armor panel onto the hull of the vehicle at a location thereon in which protection is sought or by bolting, where the armor panel and the hull of the vehicle are pre-formed with corresponding bores/threads for receiving therein bolts/screws to attach the armor panel to the hull.

In the former case, the armor panel is affixed to the hull permanently, whilst in the latter case the armor panel is detachably attached to the hull and may serve as an add-on panel.

### SUMMARY OF THE INVENTION

According to one aspect of the present invention there is provided an attachment mechanism adapted for attachment of an armor element to a body to be protected by said armor element, said attachment mechanism comprising a first unit and a second unit which are adapted to engage with each other to provide said attachment, said first unit comprising a first static member and said second unit comprising a second static member and a working member, one of which static members is adapted for fixed attachment to said armor element, and the other is adapted for fixed attachment to said body to be protected, said mechanism further comprising a screw-free locking arrangement between the two static members, defined by a locking gap associated with a locking body portion in said first static member, and a locking tongue portion of said working member in said second unit, said locking tongue portion being displaceable relative to the second static member so as to move into said gap to assume a locked position in which at least in one cross-sectional plane of the mechanism said locking body portion of the first static member separates between said locking tongue portion of the working member and a portion of the second static member, whereby the locking engagement between the first and second static members of the respective first and second units is achieved.

The locking tongue portion may be adapted for moving into the locking gap along a locking tongue portion trajectory that lies in a gap-entering plane different from and, possibly, perpendicular to said cross-sectional plane, without performing any additional movement with respect to said second static member during its entering said gap, the trajectory of which is other than lying in said gap-entering plane. The mechanism may be designed so that the movement of the locking tongue portion along said trajectory may be the only movement performed by the locking tongue portion during its entering the gap.

The locking tongue portion of the working member may constitute its integral part, and the trajectory of the displacement of the working member causing the entry of the locking tongue portion into the locking gap, may also lie in the gap entering plane.

According to another aspect of the present invention, there is provided an armor element with said first static member mounted thereon, and/or a body to be protected with said second unit mounted thereon.

Said first unit and the second unit may be attached to said armor element and said body to be protected, respectively, by bolts, welding etc.

According to another aspect of the present invention there is provided a kit for producing an armored portion of a body to be protected, said kit comprising:
an armor element; and
an attachment mechanism as described above, possibly, with the static member of said first unit being permanently mounted to said armor element.

According to a further aspect of the present invention there is provided an armored vehicle comprising a hull having said second unit attached thereto at its area to be protected.

The locking arrangement between the two static members may be any appropriate arrangement allowing the self-sufficient locking engagement between the two static members, the term '*self sufficient*' with respect to the engagement meaning herein as allowing bringing the locking tongue into its locked position by moving the working member solely by hand, e.g. without any additional tools or mechanisms.

The following are some examples of such an engagement:
- a snap engagement - in which the locking tongue portion is elastically bendable, allowing the locking tongue portion to take on an initial position and a bent position. In this case, in order to bring the locking tongue portion into its locked position, pressure is first applied to the working member by an operator to bring it into the bent position in which the locking tongue portion may be urged into the locking gap, during the entering movement, and thereafter the locking tongue is allowed to assume its initial position within the locking gap to provide the above engagement.
- an interlocking engagement - in which the locking tongue portion and the locking gap are of corresponding interlocking shape. In this case, in order to bring the locking tongue portion into its locked position, the working member is either displaced or rotated by an operator until the locking tongue portion and the locking gap are engaged with one another.
- a pressure engagement - in which the locking tongue portion is received within the locking gap under pressure, e.g. a wedge mechanism. In this case, in order to bring the locking tongue portion into the locking gap, an operator must apply pressure to the locking tongue portion during the entering movement thereof into the locking gap. In particular, the working member may be formed as a lever in order to allow the operator to apply said pressure.

The working member of the second unit may be formed with a securing portion adapted to engage a corresponding securing portion formed in the first unit, when the locking tongue is in its locked position.

The attachment mechanism may also comprise a securing arrangement adapted to prevent the working member from spontaneous displacement which may cause movement of the locking tongue portion from its locked position into an open position, which may cause disengagement between the armor element and body to be protected.

The attachment mechanism may also comprise an alignment arrangement providing that the first unit and the second unit are properly aligned when the armor element is mounted onto the body to be protected.

According to one example, the working member and the static member of the second unit are pivotally connected to one another such that displacement of the locking tongue into its locked position is provided by pivotal movement of the working member with respect to the static member.

According to another example, the working member may be adapted for linear displacement with respect to the static member to bring the locking tongue portion into its locked position. In particular, the working member may be constantly spring biased into the latter position, thereby being prevented, *inter alia*, from spontaneous displacement from the locked position to the open position of the working member. In this case, displacement of the working member may be provided by applying a force against the biasing force of the spring.

According to one particular design, the working member may be provided with a shifting member adapted to allow an operator to apply pressure against the biasing spring. For example, such a shifting member may be a gripping ring, a handle, a lever and the like, attached to or integrally formed with the working member. Alternatively, the shifting member may be a separate member adapted to constantly engage the working member in order to displace its locking tongue portion from one position to another. For example, the shifting member may be in the form of an eccentric lever mounted onto the second static member and adapted to be displaced between a first position in which it biases the working member against the biasing force of the spring, and a second position in which is allows the biasing spring to displace the working member into its locked position.

According to all of the above examples and designs, the securing portion of the working member may be in the form of a latch or a projection, and the securing portion of the static member may be in the form of a securing bar spaced from the body to be protected and extending generally parallel thereto, such that when the locking tongue is in the locked position, the latch or projection are adapted to be received within the space between the body to be protected and the securing bar, thus preventing disengagement of the armor element from the body to be protected.

According to yet another example, the working member may be adapted for revolving within the static member. For example, it may be in the form of a circular plate fitted within a circular sleeve. In this case, the securing portion of the working member may be in the form of a part of a circular channel and the securing portion of the second unit may be in the form of a securing pin projecting generally perpendicular to the body to be protected, and adapted for being received within the circular channel. In particular, the securing pin may be formed with a head portion having a diameter larger than the diameter of the securing pin, and the channel may have a dimension corresponding to the diameter of the pin, wherein, at a particular point along the channel the dimension of the channel has a widened portion which is slightly larger in dimension, in order to receive therein the head portion of the securing pin.

Thus, in assembly, when the armor element is mounted onto a body to be protected, the head portion of the securing pin is first aligned and then received within the widened portion of the working member until it projects from the other side thereof, and thereafter the working member is revolved within the static member such that securing rod slides within the circular channel until the widened portion thereof is no longer aligned with the head portion of the securing pin, thereby preventing disengagement of the first unit from the second unit.

All the above examples may allow at least one of the following:
- quick and easy attachment/detachment of the armor element from the body to be protected;
- attachment/detachment of the armor element on a site different from the armor and/or vehicle manufacturing site;
- quick and easy replacement of the armor element in case of damaged caused thereto;
- space-efficient transportation of a plurality of armor elements and/or the body to be protected to a remote location;
- efficient weight distribution - allowing the body to be protected to be transported separately from the armor elements thereof;
- reducing weight in a specific terrain - for example, when passing through a terrain where the vehicle may sink, the armor elements may be detached to reduce weight (and be left behind); and
- between two bases. For example, when driving the vehicle between two bases, each base may have in stock the armor elements and corresponding attachment mechanism, whereby the armor elements may be removed at one base, the vehicle driven to the other base and the armor elements of the other base being mounted on the vehicle.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1A** is a schematic isometric view an attachment mechanism according to one embodiment of the present invention;
**Fig. 1B** is a schematic exploded view of the attachment mechanism shown in Fig. **1A**;
**Fig. 2A** is a schematic isometric view of an attachment mechanism according to another embodiment of the present invention, in an open position thereof;
**Fig. 2B** is a schematic isometric view of the attachment mechanism shown in Fig. 2A, in a closed position thereof;
**Fig. 2C** is a schematic exploded view of the mechanism shown in Fig. 2A;
**Fig. 2D** is a schematic top view of the attachment mechanism shown in Fig. 2B;
**Fig. 2E** is a schematic enlarged partial longitudinal cross-sectional view taken along the plane GE shown in Fig. 2A, and denoted by line A-A shown in Fig. 2D;
**Fig. 2F** is a schematic enlarged partial longitudinal cross-sectional view taken along the plane CS shown in Fig. 2A, and denoted by line B-B shown in Fig. 2D;
**Fig. 3** is a schematic exploded view of an attachment mechanism according to a further embodiment of the present invention;
**Fig. 4A** is a schematic isometric view of an attachment mechanism according to still another embodiment of the present invention;
**Fig. 4B** is a schematic exploded view of the attachment mechanism shown in Fig. 4A;
**Fig. 4C** is a schematic isometric view of a static member used in the attachment mechanism shown in Figs. 4A and 4B; and
**Fig. 4D** is a schematic isometric view of a working member used in the attachment mechanism shown in Figs. 4A and 4B.

### DETAILED DESCRIPTION OF EMBODIMENTS

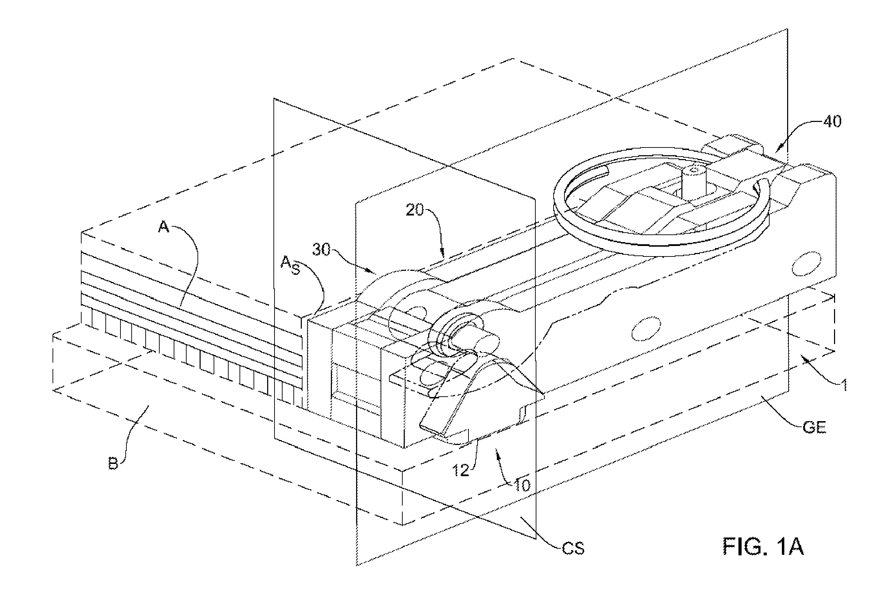

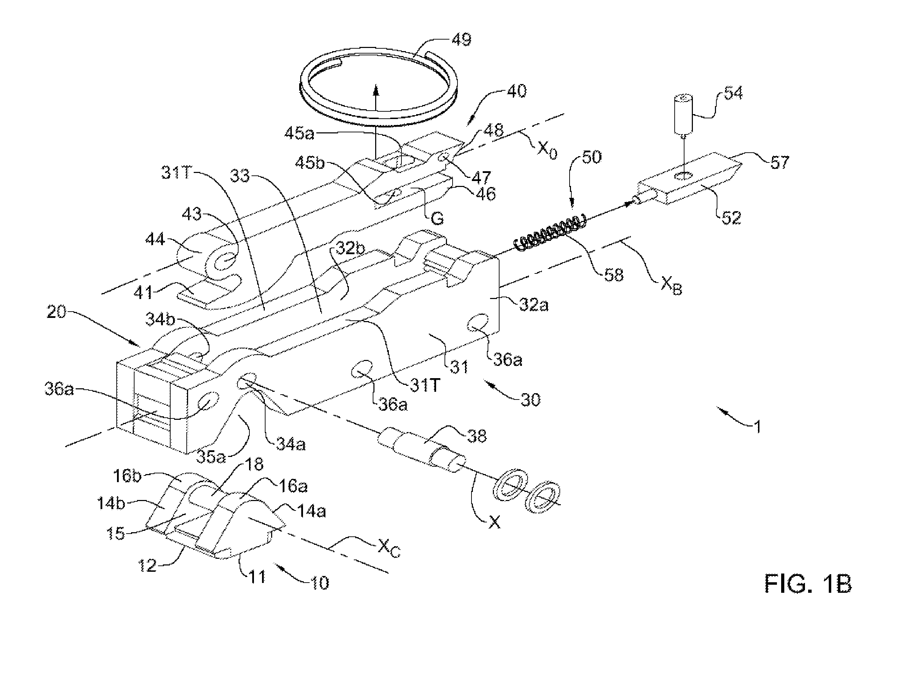

With reference to Figs. 1A and 1B, an attachment mechanism generally designated **as 1**, is shown comprising a first unit **20** fixedly mounted on an armor panel A (shown in phantom lines), and a second unit **10** fixedly mounted on a body to be protected B (also shown in phantom lines), which for example, may be a side wall of a hull of a vehicle. The first unit **20** and the second unit **10** are so designed as to be adapted for detachable attachment to one another in a self sufficient manner, i.e. solely by hand, without the use of any instruments or additional attachment elements, such as e.g. bolts or the like.

With reference to Fig. 1B, the second unit **10** has a base portion **12** with a base surface **11,** which is rectangular shaped, and is substantially flat, two side walls **14a, 14b** extending substantially perpendicular to the base surface **11** and spaced from each other to form and a locking gap **15** therebetween. Each of the side walls **14a, 14b** is formed with a convexly curved contact surface **16a, 16b** respectively.

The second unit **10** further comprises a locking body portion **18** in the form of a catch extending between the two side walls **14a, 14b** along an axis **X_{C}.** The locking body portion **18** is located such that it binds the locking gap **15** at its end opposite the base portion **12,** while leaving a space between the locking body portion **18** and the base portion **12.**

The first unit **20** is formed as an assembly comprising a static member **30** adapted for fixed mounting to a flange portion **FP** of the armor panel **A** (see Fig. 1A), a working member **40** hingedly articulated to the static member **30** allowing it to assume various positions with respect thereto, and a safety mechanism **50** adapted for securing said working member **40** to the static member **30** at a pre-defined position.

The static member **30** is in the form of an elongated body extending along a longitudinal axis **X_{B}**, and having two side walls **32a, 32b** spaced apart from one another to form a gap **33** therebetween. The side walls **32**a and **32**b are formed with respective pivot ports **34**a and **34**b, aligned along an axis **X_{P}** which is perpendicular to the longitudinal axis **X_{B}**, for receiving therein a hinge **38,** for pivotally articulating thereto the working member **40.** In addition, the side walls **32**a and **32**b are formed with respective aligned attachment holes **36**a and **36**b, extending perpendicular to the longitudinal direction **X_{B}**, for attachment of the static member **30** to the flange portion FP of the armor panel A, as shown in Fig. 1A. The static member **30** is further formed with receiving nooks **35**a, **35**b adapted for engagement with the second unit **10.**

The working member **40** is formed of a body **42** extending along a longitudinal axis X_{O} and having a pivot section at one end thereof, and a securing section at another end thereof. The pivot section is formed with a pivot portion **44** having a pivot hole **43,** and a locking tongue portion **41** in the form of a latch. The securing portion is formed with a fork-like design, having a first portion **46,** and a second portion **48** with a gap **G** therebetween. The first portion and second portion are formed with respective securing apertures **45**a, **45**b adapted for engaging a securing mechanism **50.**

The securing mechanism **50** comprises a base plate **52** formed with a port adapted to fixedly receive a pulling member **54** projecting perpendicular thereto. The base plate **52** has a first end formed with a spring projection **56** adapted for mounting thereon of a biasing spring **58,** and a second end formed with a securing portion **57,** adapted to be receive within a securing groove **R** of the static member **30.** The entire securing mechanism **50** is adapted to be received within the working member **40,** in particular, the base plate **52** is received within the gap **G** between the portions **46** and **48,** and the pulling member **54** is received within the aperture **45**a, thereby preventing the base plate **52** from disengaging from the working member **40.** The working member **40** is also fitted with a pulling ring **49** adapted for more convenient application of force against the biasing spring **58.**

In assembly, the second unit **10** is welded via surface **11** thereof to the body to be protected **B,** at a predetermined location, corresponding to the desired future location of the armor element **A.** The first unit **20** is bolted to the side **A_{S}** of the armor element **A,** using bolts passing through the attachment holes **36a** and **36b.**

When mounting the armor element **A** onto the body to be protected **B,** the working member **40** is transverse to the static member **30.** The armor element **A** is then positioned so on the body to be protected **B,** that the contact surfaces **16a, 16b** are received within the respective nooks **35a, 35b,** so as to align the armor element **A** with the body to be protected **B.**

Once positioned, the working member **40** is pivoted about the pivot point **43** such that the locking tongue portion **41** performs a rotational entering movement the trajectory of which lies in the gap-entering plane **GE.** Thus, the locking tongue portion is received under the locking body portion **18.** The working member **40** is further pivoted until the surface **42** thereof becomes almost flush with the surfaces **31T** of the static member **30.** It should be noted that during the entering movement, the locking tongue portion does not perform any additional movement the trajectory of which lies outside the gap-entering plane **GE.**

In the closed position described above, due to the biasing spring **58,** the securing portion **57** of the securing mechanism **50** projects outwards to be received within one of the grooves R of the static member **30,** preventing further pivoting of the working member **40.** In this position, the armor element **A** is firmly secured to the body to be protected **B** by virtue of the engagement between the first unit **20** and the second unit **10.**

In order to disengage the armor element **A** from the body to be protected **B,** it is required to disengage the first unit **20** from the second unit **10.** This is performed by pulling on the ring **49,** entailing retraction of the base plate **52** using the pin **54,** allowing the working member **40** to pivot about the hinge **38** until the locking tongue portion **41** thereof no longer engages the locking body portion **18,** whereby the armor element **A** may be removed from the body to be protected **B.**

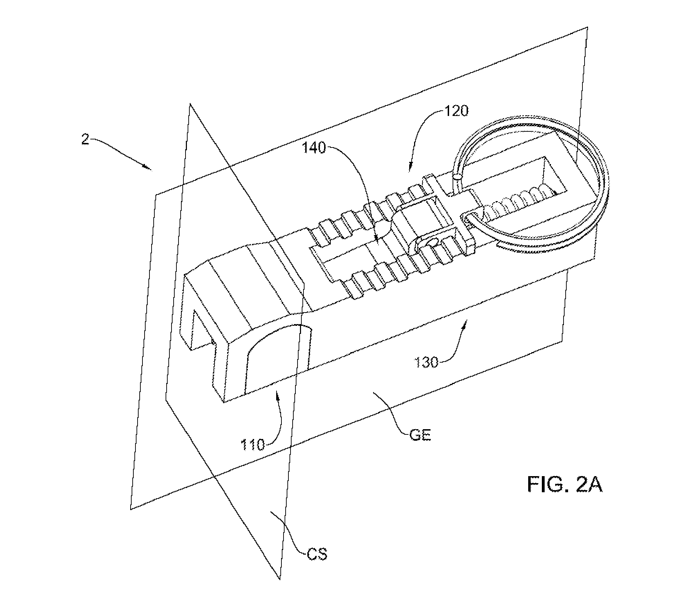

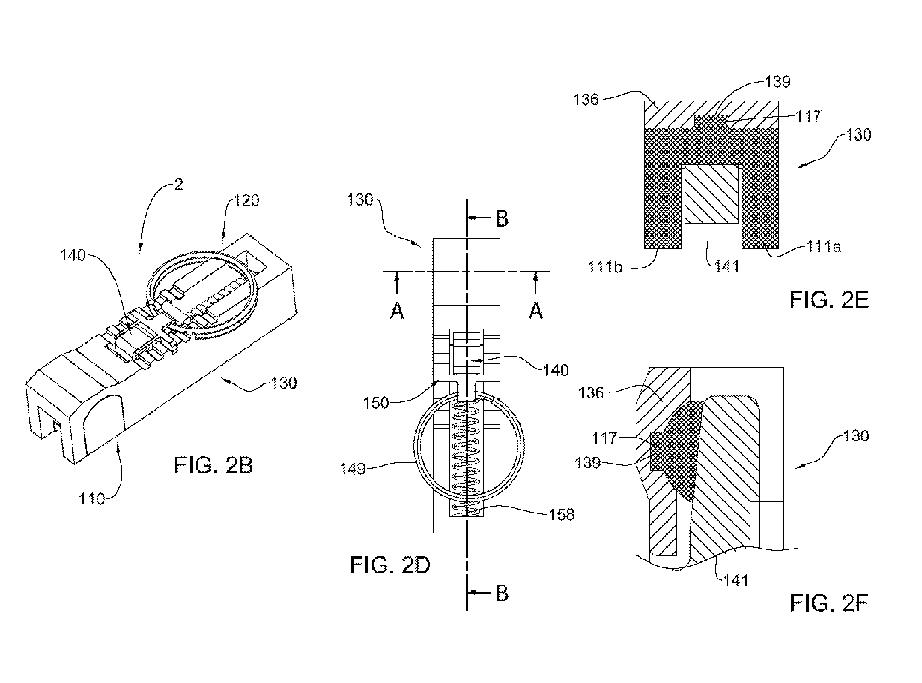

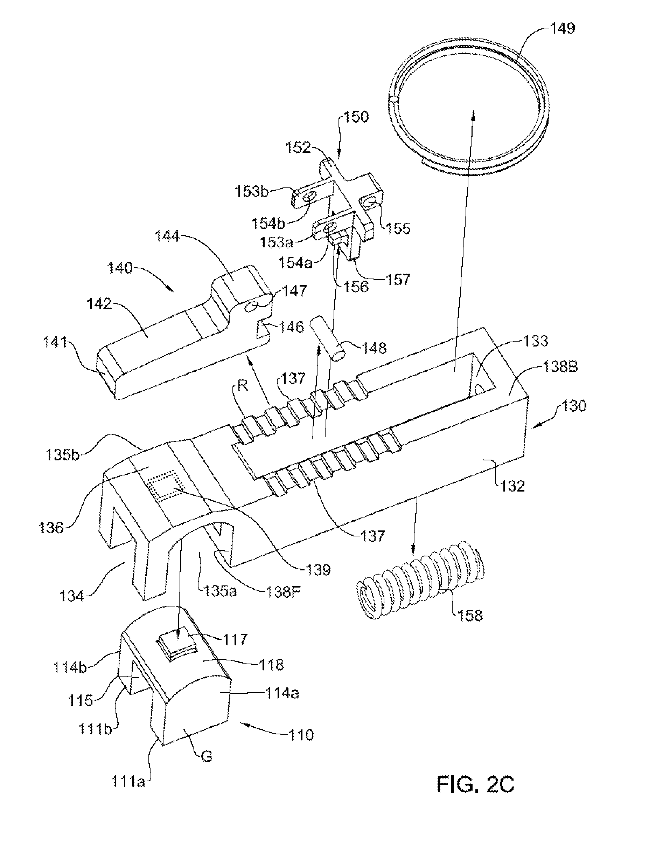

Turning now to Figs. 2A to 2E, another design of the attachment mechanism is shown generally designate as **2,** and comprising a second unit **110** adapted for fixed attachment to a body to be protected **B,** and a first unit **120** adapted for fixed attachment to an armor element **A.**

The second unit **110** is formed with two side walls **114a, 114b** extending substantially perpendicular to the static portion **112,** such that a locking gap **115** extends therebetween. The locking gap **115** is delimited from above by a locking body portion **118.** Each of the side walls **114a, 114b** is of a generally rectangular shape and is formed with a contact surface **116a, 116b** respectively. The locking body portion **118** is formed on a top surface thereof with a rectangular alignment projection **117** adapted for alignment of the second unit **110** with respect to the first unit **120.**

The first unit **120** is formed as an assembly comprising a static member **130** adapted for fixed attachment to the armor element, an working member **140** received within the static member **130** allowing it to assume various positions with respect thereof, and a safety mechanism **150** adapted for securing the working member **140** to the static member **130** at a pre-defined position.

The static member **130** is formed with a body **132** extending along a longitudinal axis **X_{B},** having a back wall **138B,** and a front wall **138F** opposite thereto, with two side walls **132a, 132b** extending therebetween, being spaced apart from one another to form a gap **133** therbetween. Each side wall **132a, 132b** is formed with a nook **135**a, **135**b adapted for engagement with the second unit **110.** Each side wall **132a, 132b** is further formed with a securing portion **R** comprising a plurality of teeth **137** adapted for engagement with the securing mechanism **150.**

The static member **130** further comprises a bridge portion **136** adjacent the front wall **138F,** the front wall **138F** having formed therein an opening **136a.** The bridge portion **136** is formed with a rectangular recess **139** adapted, in the assembled position, to receive therein a rectangular projection **117** of the body unit **110.**

The working member **140** is formed of a body **142** extending along a longitudinal axis **X_{O}** and having a locking tongue portion **141** in the form of a wedge at one end thereof, and a securing section **144** at another end thereof. The securing portion **144** is formed with a pivot hole **147,** and a recess **146,** both being adapted for engagement with the securing mechanism **150.**

The securing mechanism **150** comprises a restriction element **152** and a biasing spring **158.** The restriction element **152** is formed with a restriction bar **155** adapted for engagement with the teeth **137** of the static member **130,** two projections **153a, 153b** extending perpendicularly therefrom, and a gripping portion **155** adapted for articulation of a gripping ring **149** thereto. Each of the projections **153a, 153b** is formed with an attachment hole **154a, 154b,** adapted for articulation to the pivot hole **147** of the working member **140** via a hinge **148.**

The arrangement is such that the working member **140** is located within the gap **133** of the static member **130,** and the biasing spring **158** is positioned between the back wall **138** and the base element **152,** so as to bias the latter, and consequently the working member away from the back wall **138.** Thus, in its initial position, the locking tongue portion **141** extends through the opening **136a** and under the bridge portion **136.**

In assembly, the second unit **110** is welded via surfaces **11a, 111b** thereof to the body to be protected **B,** at a predetermined location, corresponding to the desired future location of the armor element **A.** The first unit **120** is fixedly attached to the side **A_{S}** of the armor element **A,** either using welding, or bolts passing through specifically designed holes (not shown) formed in the side walls **132a, 132b.**

When mounting the armor element **A** onto the body to be protected **B,** the position of the locking tongue portion **141** prevents the engagement between the second unit **110** and the first unit **120.** Thus, the locking tongue portion **141** should first be retracted. However, due to the securing mechanism **150** and the engagement of the bar **152** with the teeth **137,** simple lateral movement of the locking tongue portion **141** is prevented. Therefore, it is required to pull on the gripping ring **149** so as to pivot the base element **152** about the working member **140,** in order to release the engagement between the teeth **137** and the base element **152.** Thereafter, the working member **140** may be displaced towards the back wall **138B** against the biasing force of the spring **158** until the locking tongue portion **141** no longer projects from the opening **136.**

In this position, it is possible to position the first unit **120** properly, such that the second unit **110** is received within the nooks **135** under the bridge **136,** and the projection **117** is received within the rectangular recess **139.**

Once positioned, the gripping ring **149** may be released so as to allow the working member **140** to re-deploy, such that the locking tongue portion **141** thereof performs an axial movement along a trajectory lying in the gap-entering plane GE, towards the second unit **110.** In this position, the locking tongue portion **141** projects from the opening **136a.** However, in this position, the locking tongue portion **141** also extends within the locking gap **115,** preventing disengagement between the first unit **120** and the second unit **110.**

Particular attention is drawn to Figs. 2E and 2F, in which a cross-section of the area of the second unit **110** is shown, in which it may be observed that, in this particular example, along both the cross-sectional plane **CS** and the gap-entering plane **GE,** the locking body portion **118** is disposed between the locking tongue portion **141** of the working member **140** and a portion of the static member **130.**

When disengaging the first unit **120** from the second unit **110,** a similar operation is performed to that required for engaging the units **110, 120** one with the other, i.e. the locking tongue portion **141** is retracted, allowing the two units **110, 120** to separate from one another.

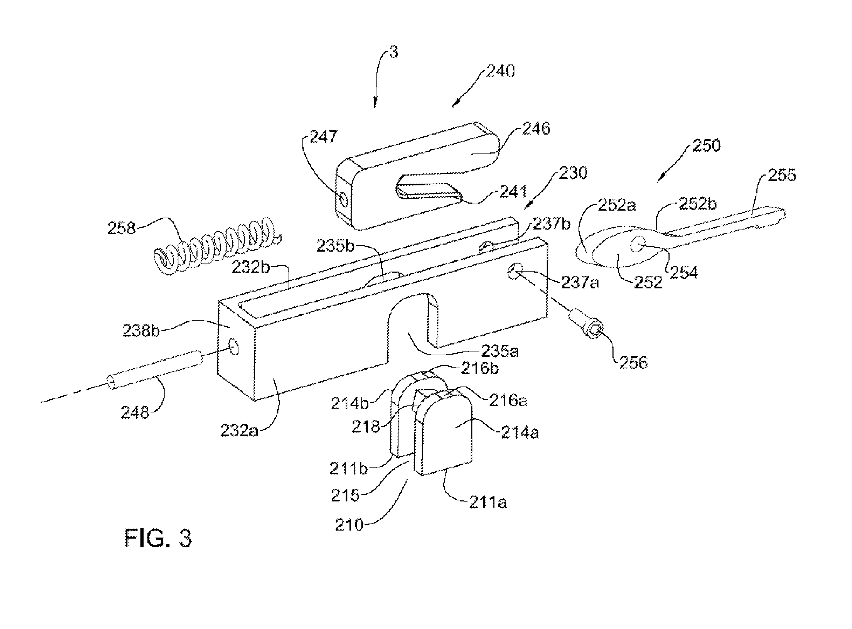

Turning now to Fig. 3, yet another example of an attachment mechanism is shown, generally designated as **3,** and comprising a second unit **210** and a first unit **120.** The first unit **220** comprises a static member **230,** a working member **240** and a securing member **250.**

The present example operates in a similar manner to previous example in the sense that the working member **240** is biased by a biasing spring **258** and comprises a locking tongue portion **241** adapted to extend under a locking body portion **218** of the second unit **210** so as to fix it to the static member **230.** However, in the present example, the locking mechanism **250** comprises an accentor **252** pivotally articulated to the static member **230** using a hinge **256,** and adapted to depress the working member **240** against a force of the biasing spring **258.**

In particular, the accentor **252** has an elliptic shape having a first end **252a** and a second end **252b,** and is formed with a pivot hole **254** located adjacent one of the focal points of the ellipse. In addition, a lever portion **255** extends from the ellipse, adapted for changing the position of the accentor **252.**

In assembly, the second unit **210** is welded via surface **211a, 211b** thereof to the body to be protected **B,** at a predetermined location, corresponding to the desired future location of the armor element **A.** The first unit **220** is attached to the side **A_{S}** of the armor element **A,** either by welding, or using bolts passing through the specifically designed attachment holes (not shown).

In mounting, the first unit **220** is brought to a position in which the first end **252a** of the accentor **252** engages a pressure portion **246** of the working member **240,** and the lever member **255** faces away from the working member **240.** Thus, the biasing spring **258** is depressed and the locking tongue portion **241** is retracted, so as to allow the second unit **210** to be received within the nooks **235a, 235b.**

Thereafter, the accentor **252** is pivoted about the pivot point **245** thereof, until the pressure portion **246** of the working member **240** engages the second end **252b** of the accentor **252.** In this position, since the second end **252b** is considerably closer to the pivot point **254** than the first end **252a,** the working member **240** is free to displace by virtue of the biasing spring **258** away from the back wall **238b,** such that the locking tongue portion **241** extends under the locking body portion **218,** thereby lockingly engaging the second unit **210.**

In disengagement between the first unit **220** and the second unit **210,** a reverse operation is performed, i.e. the accentor **252** is pivoted in the opposite direction, thereby pushing the working member **240** backwards, until the locking tongue portion **241** no longer extends under the locking body portion **218,** whereby the units **210, 220** are free to disengage.

In general, in the above described embodiment of Fig. 3, the accentor **252** performs the same function as the biasing spring **158** of the attachment mechanism shown in Figs. 2A to 2F.

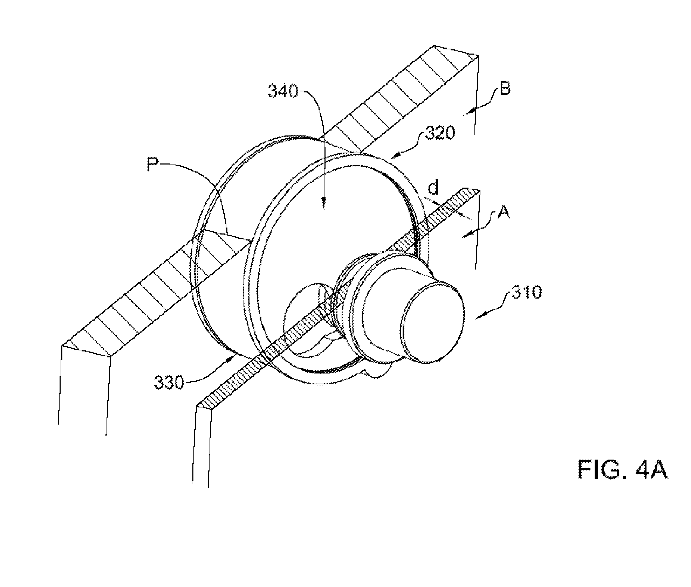

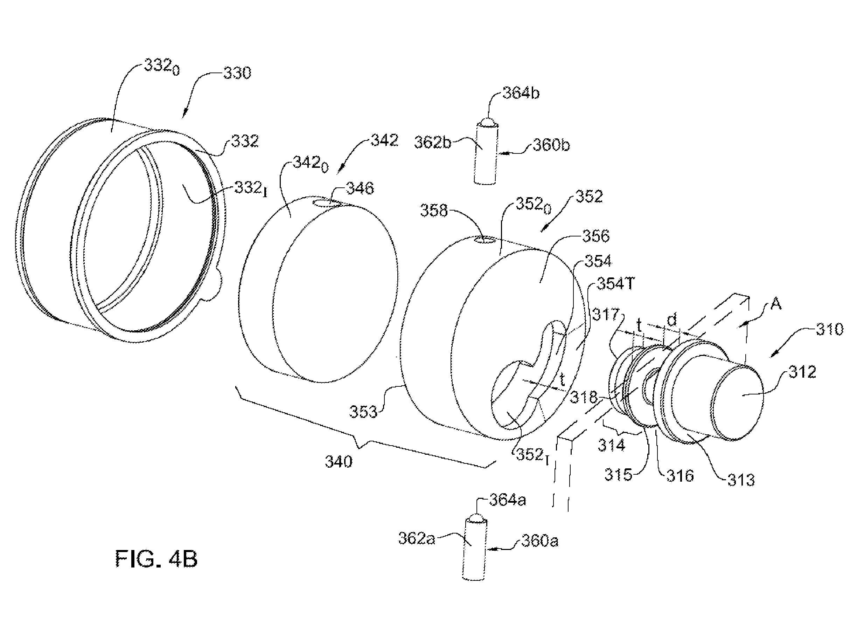

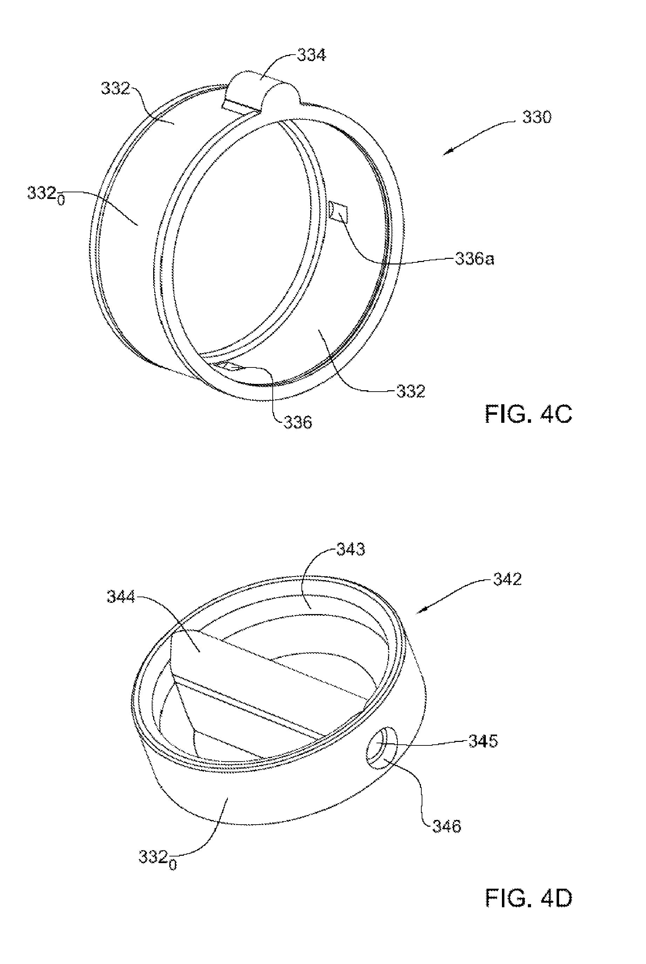

Turning now to Figs. 4A to 4D, a still further example of an attachment mechanism is shown, generally designated as **4,** and comprising a second unit **310** and a first unit **320.** The first unit **320** comprises a static member **330** and an operating mechanism **340** comprising an intermediate member **342** and a working member **352.** The elements **310, 320, 330** and **340** are all of circular shape, each having a central axis **X.**

The second unit **310** comprises a first circular member **312** and a second circular member **314** adapted for engagement therebetween along a mutual axis thereof to grasp therebetween the armor element A. Each of the first and second circular member **312, 314** is formed with a respective retention disc **313, 315,** the arrangement being such that when the members **312, 314** are engaged, a gap **316** of width d extends between the retention discs **313, 315.** The width d corresponds to the width of the armor element **A.**

In addition, the second circular member **314** is formed with an additional retention disc **317** spaced from the retention disc **315** by a locking body portion rod **318** such that there extends a locking gap of width ***t*** therebetween.

The static member **330** is adapted, contrary to the previous examples in which the static member is attached to the armor element from the side, for being embedded within the body to be protected B. In particular, it is embedded such that there is provided access to the first unit **320** both from outside the body to be protected **B** and from inside the body to be protected **B.** The static member **330** is in the form of a circular sleeve **332** having an inner surface **332_{I}** and an outer surface **332_{O}**, and is adapted for fixed attachment to the body to be protected, more specifically, for fixed attachment of the outer surface **332_{O}** to the inner surface of a prefabricated attachment port P of the body to be protected.

The circular sleeve **332** is further formed on the outer surface **332_{O}** thereof with an aligning projection **334,** adapted to prevent rotation of the circular sleeve **332** within the attachment port P. In addition, the circular sleeve **332** is formed on the inner surface **332_{I}** thereof with two recesses adapted for locking the position of the operating mechanism **340** as will be discussed later with respect to the structure of the operating mechanism **340.**

The operating mechanism **340** comprises an intermediate member **342** in the form of a circular disc, having an external surface **342_{O}**. The intermediate member **342** is formed with a cavity **343** across which extends a gripping portion **344** along the diameter of the cavity **343,** allowing an operator to grip the gripping portion **344** from both sides (his fingers being positioned within the cavity **343**). The circular disc is further formed with a central channel **345** extending within the gripping portion **344,** and adapted for accommodation therein of two securing pins **360a, 360b,** one on each side thereof.

The operating mechanism also comprises a working member **352** formed with a cavity **353** adapted for accommodating the intermediate member **342** therein, and having an outer surface **352_{O}** and an inner surface **352_{I}**. The working member **352** further comprises a front face **351** perpendicular to the central axis **X** thereof, the front face **351** being formed with an attachment opening **354** having a first, circle-shaped portion **355** adapted for insertion of the additional retention disc **317** of the second unit **310** therein, and a locking tongue portion **354T** in the form of a prolonged narrow portion adapted for sliding of the locking body portion **318** therein. The thickness ***t*** of the locking tongue portion **354T** corresponds to the width **t** of the locking gap between the retentions discs **315** and **317.**

The working member **352** is also formed with an opening **358** adapted for protrusion of a securing pin **360a** therethrough. The securing pins **360a,** 360b are each formed with a respective pin portion **362a, 362b,** and a respective ball shaped end **364a, 364b,** adapted for securing the position of the operating mechanism **340** as will hereinafter be discussed.

The arrangement is such that the intermediate member **342** is fixedly articulated within the working member **352** using one of the securing pins **360b,** the outer surface **342_{O}** thereof being flush with the inner surface **352_{I}** of the working member **352.** Thus, turning the intermediate member **342** using the gripping portion **344** entails rotation of the working member **352,** and indeed of the entire operating mechanism **340** about the central axis **X.** The second securing pin **360a** is adapted to protrude from the opening **346** of the intermediate member **342,** and through the opening **358** of the working member **352,** such that the ball end **364a** thereof is directed towards the inner surface **332_{I}** of the circular sleeve **332.**

The entire operating mechanism **340** is received within the circular sleeve **330** such that the outer surface of the working member **352_{O}** is flush against the inner surface **332_{I}** of the circular sleeve **332.** The ball end **364a** of the securing pin **360a** is received within the one of the recesses **336** of the circular sleeve **332,** thereby preventing spontaneous rotation of the operating mechanism **340** with respect to the static member **330.**

In assembly, the two members **312** and **314** of the second unit **310** are clamped onto a panel of width **d** of the body to be protected **B** from both sides such that the panel is fixedly retained between the two members **312, 314.** The first unit **320** is attached to body to be protected, more particularly, the outer surface **332_{O}** of the circular sleeve **332** is welded to the inner surface of the attachment port **P** of the body to be protected.

In mounting, the armor element A along with the second unit **310** is brought such that the retention disc **317** is inserted through the circle-shaped opening **355.** Once inserted, the operating mechanism **340** may be rotated about the central axis X using the gripping portion **344,** whereby the locking tongue portion **354T** slides about the locking body portion **318** of the second unit **310** such that the locking tongue portion **354T** of the working member **352** is received within the locking gap of width **t** between the retention discs **315, 317,** effectively trapping the retention disc **317** within the working member **352.**

Also in this position, the securing pin **360a** is also displaced with respect to the circular sleeve **332,** such that the ball end **364a** thereof is now received within the other recess **336,** preventing spontaneous rotation of the entire operating mechanism **340** to and open position in which that units **310, 320** may be disengaged from one another.

In disengagement between the first unit **320** and the second unit **310,** a reverse operation is performed, i.e. the entire operating mechanism **340** is rotated within the static member **330** in the opposite direction, thereby bringing the retention disc **317** to face the circle-shaped portion **355,** whereby the units **310, 320** are free to disengage.

Those skilled in the art to which this invention pertains will readily appreciate that numerous changes, variations, and modification can be made without departing from the scope of the invention, *mutatis mutandis*.

## Claims

1. An attachment mechanism adapted for attachment of an armor element to a body to be protected by said armor element, said attachment mechanism comprising a first unit and a second unit which are adapted to engage with each other to provide said attachment, said first unit comprising a first static member and said second unit comprising a second static member and a working member, one of which static members is adapted for fixed attachment to said armor element, and the other is adapted for fixed attachment to said body to be protected, said mechanism further comprising a screw-free locking arrangement between the two static members, defined by a locking gap associated with a locking body portion in said first static member, and a locking tongue portion of said working member in said second unit, said locking tongue portion being displaceable relative to the second static member so as to move into said gap to assume a locked position in which at least in one cross-sectional plane of the mechanism said locking body portion of the first static member separates between said locking tongue portion of the working member and a portion of the second static member, whereby the locking engagement between the first and second static members of the respective first and second units is achieved.

2. An attachment mechanism according to Claim 1, wherein the locking tongue portion is adapted for moving into the locking gap along a locking tongue portion trajectory that lies in a gap-entering plane different from said cross-sectional plane, without performing any additional movement with respect to said second static member during its entering said gap, the trajectory of which is other than lying in said gap-entering plane.

3. An attachment mechanism according to Claim 2, wherein said locking tongue portion of the working member constitutes its integral part, and the trajectory of the displacement of the working member causing the entry of the locking tongue portion into the locking gap, also lies in the gap entering plane.

4. An attachment according to Claim 1, 2 or 3, wherein there is provided an armor element with said first static member mounted thereon, and/or a body to be protected with said second unit mounted thereon, optionally said first unit and said second unit are attached to said armor element and said body to be protected, respectively, by at least one of the following: bolting and welding.

5. An attachment mechanism according to any one of Claims 1 to 4, wherein the locking arrangement between the two static members is self-sufficient.

6. An attachment mechanism according to Claim 5, wherein said locking arrangement is based on a snap engagement.

7. An attachment mechanism according to Claim 5, wherein said locking arrangement is based on an interlocking engagement.

8. An attachment mechanism according to Claim 5, wherein said locking arrangement is based on a pressure engagement.

9. An attachment mechanism according to any one of Claims 1 to 8, wherein said attachment mechanism further comprises a securing arrangement adapted to prevent the working member from spontaneous displacement of the locking tongue portion from its locked position into an open position.

10. An attachment mechanism according to any one of Claims 1 to 9, wherein said attachment mechanism further comprises an alignment arrangement providing that the first unit and the second unit are properly aligned when the armor element is mounted onto the body to be protected.

11. An attachment mechanism according to any one of Claims 1 to 10, wherein the working member and the static member of the second unit are pivotally connected to one another such that displacement of the locking tongue into its locked position is provided by pivotal movement of the working member with respect to the static member.

12. An attachment mechanism according to any one of Claims 1 to 11, wherein the working member is be adapted for linear displacement with respect to the static member to bring the locking tongue portion into its locked position.

13. An attachment mechanism according to any one of Claims 1 to 12, wherein the working member is adapted for revolving within the static member.

14. A kit for producing an armored portion of a body to be protected, said kit comprising:
an armor element; and
an attachment mechanism of Claim 1.

15. An armored vehicle comprising a hull having the second unit of the attachment mechanism of Claim 1 attached thereto at its area to be protected.
